(19) Europäisches Patentamt / European Patent Office / Office européen des brevets

(11) **EP 2 927 634 B1**

(12) **EUROPEAN PATENT SPECIFICATION**

(45) Date of publication and mention
of the grant of the patent:
**27.02.2019 Bulletin 2019/09**

(21) Application number: **13794121.7**

(22) Date of filing: **31.07.2013**

(51) Int Cl.:
*G01C 11/08* (2006.01)     *G01C 11/00* (2006.01)
*G01C 3/00* (2006.01)      *G06T 7/00* (2017.01)

(86) International application number:
**PCT/CN2013/080563**

(87) International publication number:
**WO 2013/174354 (28.11.2013 Gazette 2013/48)**

(54) **SINGLE-CAMERA RANGING METHOD AND SYSTEM**

EINZELKAMERA-SORTIERVERFAHREN UND -SYSTEM

PROCÉDÉ ET SYSTÈME DE TÉLÉMÉTRIE À UNE SEULE CAMÉRA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2012 CN 201210504460**

(43) Date of publication of application:
**07.10.2015 Bulletin 2015/41**

(73) Proprietor: **ZTE Corporation
Shenzhen, Guangdong 518057 (CN)**

(72) Inventor: **CAO, Heng
Shenzhen, Guangdong Province 518057 (CN)**

(74) Representative: **Novagraaf Technologies
Bâtiment O2
2, rue Sarah Bernhardt
CS90017
92665 Asnières-sur-Seine Cedex (FR)**

(56) References cited:
WO-A1-2008/155961     CN-A- 101 074 876
CN-A- 101 858 742      CN-A- 102 175 228
CN-A- 102 175 228      CN-A- 102 706 319
CN-A- 103 017 730      JP-A- 2009 180 536

• SAHIN E ET AL: "Development of a visual object localization module for mobile robots", ADVANCED MOBILE ROBOTS, 1999. (EUROBOT '99). 1999 THIRD EUROPEAN WORKS HOP ON ZURICH, SWITZERLAND 6-8 SEPT. 1999, PISCATAWAY, NJ, USA,IEEE, US, 6 September 1999 (1999-09-06), pages 65-72, XP010374409, DOI: 10.1109/EURBOT.1999.827623 ISBN: 978-0-7803-5672-6

• CLEMENS HOLZMANN ET AL: "Measuring Distance with Mobile Phones Using Single-Camera Stereo Vision", 32ND IEEE INTERNATIONAL CONFERENCE ON DISTRIBUTED COMPUTING SYSTEMS WORKSHOPS, ICDCSW 2012, IEEE, 18 June 2012 (2012-06-18), pages 88-93, XP032217932, DOI: 10.1109/ICDCSW.2012.22 ISBN: 978-1-4673-1423-7

EP 2 927 634 B1

## Description

## Technical Field

The present invention relates to the field of mobile terminal technology, and including to a single-camera distance ranging method and system.

## Background

Most of mobile terminals are equipped with a rear-face camera and a face camera, and the shooting and imaging process of the rear-face camera and the face camera are similar. An optical image of an object to be shot generated through a lens is projected onto the surface of an image sensor and converted to an analog electrical signal, which is then converted into a digital image signal through an Analog-Digital Converter (ABC). The digital image signal is sent to an Image Signal Processor (ISP) for processing, and finally the processed digital image signal is saved in a storage and shown on a mobile terminal screen by calling Baseband Processor (BP).

Distance ranging methods by utilizing a camera mainly include a dual-camera method and a combinatorial method of single-camera and laser head. In the dual-camera method, the images of an object to be measured are acquired by two cameras, and the distance of a spot on the object to be measured is determined according to parallax images of the spot in two cameras. In the combinatorial method of single-camera and laser head, a laser beam launched by a laser head is received and processed so as to obtain a corresponding distance. It is needed to add components when the above camera distance ranging methods are applied in a mobile terminal, for example adding a camera or a laser head, and the structure and appearance design of the mobile terminal also need to be changed.

The documents "Development of a visual object localization module for mobile robots", SAHIN E ET AL, Adavanced Mobile Robots, 1999, the Chinese patent application CN 102175228A1 and the document"Measuring Distance with Mobile Phones Using Single-Camera Stereo Vision", CLEMENS HOLZMANN ET AL, 32nd IEEE International Conference on distributed Computing Systems workshops, June 2012, provide related technical solutions; however, the above mentioned problem still remains unsolved.

## Summary

A single-camera distance ranging method and system are provided in the present invention, which are used for realizing single-camera ranging based on that a mobile terminal does not need to add optical components.

According to an embodiment of the present invention, a single-camera distance ranging method comprises the features of claims 1 or 2.

According to an embodiment of the present invention, a single-camera distance ranging system comprises the features claims 3 or 4.

By utilizing the above technical solution, the embodiments of the present invention can bring at least the following advantages: in the single-camera distance ranging method and system described in embodiments of the present invention, when the mobile terminal is in camera photograph mode, the outer edge of the target object is continuously recognized and tracked; the mobile terminal is translated toward the target object by the user. The mobile terminal calculates the distance between the mobile terminal and the target object according to the change in the display width of the target object on a screen or the change in the framing width on the screen of the mobile terminal and the translation distance of the mobile terminal. The whole distance ranging process is completed based on the existing mobile terminal image processing and movement perception functions, thereby making possible single-camera distance ranging by a mobile terminal with no requirement for additional optical component. The accuracy of the distance ranging can be further enhanced with the added step for monitoring the posture during the translation of the mobile terminal towards the target object.

## Description of the Drawings

Fig.1 is a flowchart of a single-camera distance ranging method of a first example of the present invention;
Fig.2 is a flowchart of a single-camera distance ranging method of a second example of the present invention;
Fig.3 is a flowchart of a single-camera distance ranging method of a first example embodiment of the present invention;
Fig.4 is a composition diagram of a single-camera distance ranging system of a third example of the present invention;
Fig.5 is a composition diagram of a single-camera distance ranging system of a fourth example of the present invention;
Fig.6 is a composition diagram of a single-camera distance ranging system of a second example embodiment of the present invention;
Fig.7 is a diagram of changes in related distance and ratio before and after a camera of a mobile phone translates towards a target object of an application example of the present invention;
Fig.8 (a), (b) are respectively diagrams of changes in size and related ratio of a target object from a perspective of a screen before and after a camera of a camera translates towards the target object in an application example of the present invention;
Fig.9 is a flowchart of a single-camera distance ranging method of an application example of the present invention;

Fig. 10 is a composition diagram of a single-camera distance ranging system of an application example of the present invention.

## Description of Examples and Embodiments

In order to further describe the technical feature and effect used in the present invention for reaching a predetermined purpose, embodiments and examples of the present invention will be illustrated in detail in combination with the drawings and the examples below.

The current mobile terminals are equipped with components that can locate own orientation accurately, such as three-axis gyro, the largest role of which is to measure angular velocities in X-Y-Z axis of three-dimensional space, thereby determining motion state of an object.

The mobile terminals are further equipped with components that can measure acceleration of a moving object accurately, such as accelerometer. When the accelerometer is in accelerated motion, a mass block inside is acted by the inertance and therefore moves in an opposite direction. The displacement of the mass block is limited by a spring and a damper, so that the outside acceleration can be measured by an output voltage. In addition, the displacement is just obtained by a double integral on the acceleration, and therefore the measurement of displacement can be achieved by using an acceleration sensor.

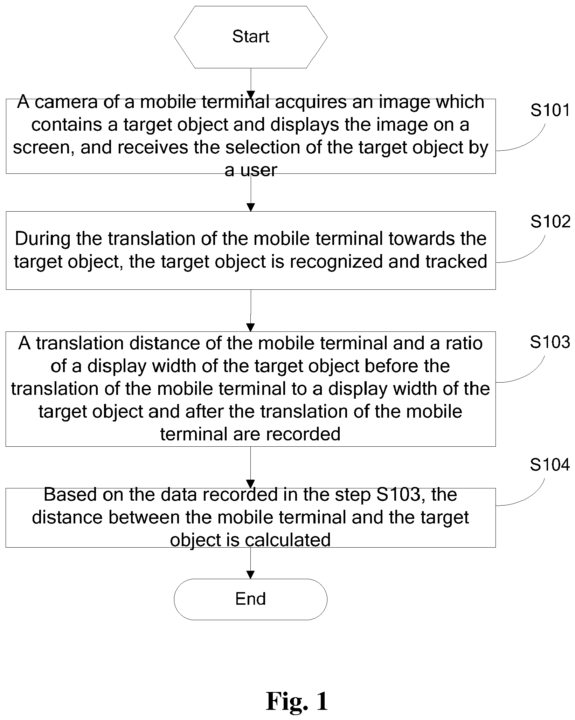

A single-camera distance ranging method in a first example of the present invention is shown in Fig.1, and the method comprises the following steps:
Step S101, a camera of a mobile terminal acquires an image which contains a target object and displays the image on a screen, and receives the selection of the target object by a user.

Optionally, for a screen with touch functionality, the user can input a contour of the target object by means of clicking or drawing a line. For a mobile terminal with an ordinary screen, the user can also input the contour of the target object by keys on a keyboard. Alternatively, for a mobile terminal that can automatically recognize a target object on the screen, when the approximate region where the target object locates is clicked by the user, the mobile terminal can recognize the target object within the region or near the region.

Step S102, during the translation of the mobile terminal towards the target object, the target object is recognized and tracked.

Optionally, the mobile terminal can recognize and track the target object input in step S101 according to a related algorithm in the existing image processing technologies. For example: when the difference in brightness or colour between the target object and the background of the target object is greater, image edge extraction algorithms can be adopted to recognize and track the target object. Wherein the image edge extraction algorithms can comprise at least one of the following: an adaptive threshold multi-scale edge extraction algorithm based on B-spline wavelets, a multi-scale discrete Canny edge extraction algorithm with combination of embedded confidence, a new edge contour extraction model-quantum statistical deformable model image edge tracking algorithm, an image tracking algorithm based on particle filter, a multi-information fusion particle filter tracking algorithm of the algorithm for melding a structural information and scale invariant feature transformation, an improved hausdorff video target tracking algorithm and so on.

Step S103, a translation distance of the mobile terminal and a ratio of a display width of the target object before the translation of the mobile terminal to a display width of the target object after the translation of the mobile terminal are recorded.

Optionally, the recorded ratio of the display width of the target object before the translation of the mobile terminal towards the target object to the display width of the target object after the translation of the mobile terminal towards the target object can be replaced with a ratio of a screen framing width of the target object before the translation of the mobile terminal towards the target object to a screen framing width of the target object after the translation of the mobile terminal towards the target object. During the translation of the mobile terminal, the target object is always within the framing scope of the mobile terminal screen. In addition, a translation distance of the mobile terminal is acquired by the accelerometer in the mobile terminal and the acquired translation distance of the mobile terminal is recorded.

Step S104, based on the data recorded in the step S103, the distance between the mobile terminal and the target object is calculated.

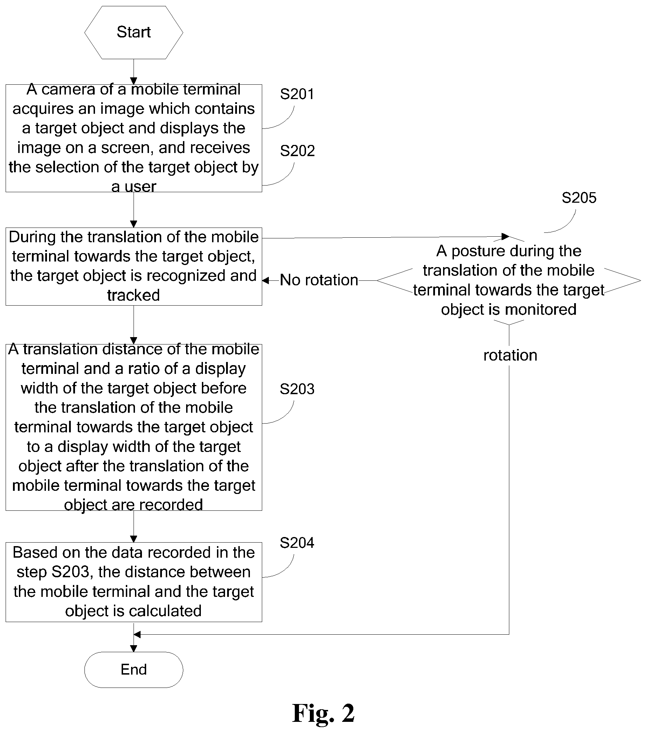

A single-camera distance ranging method in a second example of the present invention is shown in Fig.2, and the steps S201, S203, S204 of the method described in the second example are respectively the same to the steps S101, S103, S104 of the method described in the first example.

The difference between the second example of the present invention and the first example of the present invention is that, while the step S202 is executed in the second example, a step S205 of monitoring the posture during the translation of the mobile terminal towards the target object is further added. The translation described in the example of the present invention is mainly compared to the rotation, and when there is no rotation during the translation of the mobile terminal towards the target object, the accuracy of the distance ranging results can be ensured. For example, the following operations can be executed:
Step S205, the posture during translation of the mobile terminal towards the target object is monitored, and when a rotation of the mobile terminal is monitored, it is reported that a distance ranging operation fails, and the flow is ended; when the rotation of the mobile terminal is not monitored, the step S202 is continued to be executed.

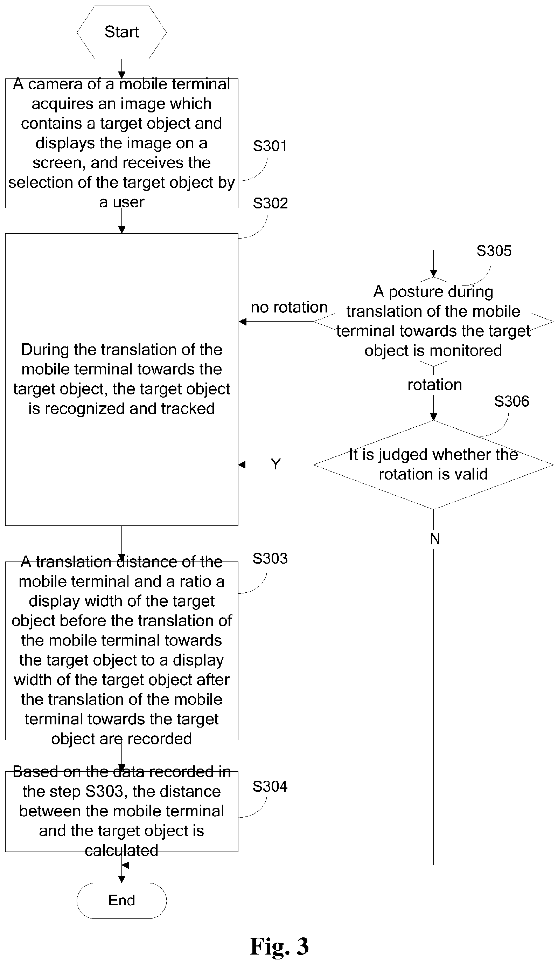

A single-camera distance ranging method in the first example embodiment of the present invention is shown in Fig.3, and the steps S301, S303, S304 of the method described in the first example embodiment are respectively the same to the steps S101, S103, S104 of the method described in the first example.

The difference between the first example embodiment of the present invention and the first example of the present invention is that, while the step S302 is executed in the first example embodiment, a step S305 of monitoring the posture during the translation of the mobile terminal towards the target object and a judgement step S306 are further added. For example, the following operations can be executed:

Step S305, the posture during the translation of the mobile terminal towards the target object monitored, and when the rotation of the mobile terminal is monitored, the step S306 is executed; when the rotation of the mobile terminal is not monitored, step S302 is continued to be executed.

Optionally, the posture during the translation of the mobile terminal towards the target object can be monitored by a three-axis gyro in the mobile terminal. When the mobile terminal rotates, the three-axis gyro reports the data about orientation and angular velocity during the rotation and so on, and the mobile terminal can further judge whether the rotation is permitted according to these data, namely executing step S306. In a practical application, when a mobile terminal hold by the user is to perform the distance ranging operation, it is easy to jitter the mobile terminal so as to cause a slight rotation of the mobile terminal, but the rotation can be permitted if the rotation does not influences result of the distance ranging operation.

Step S306, it is judged whether the rotation is valid, and when the rotation of the mobile terminal is valid, the step S302 is continued to be executed; when the rotation of the mobile terminal is not valid, it is reported that the distance ranging operation fails and the flow is ended.

Optionally, the valid rotation comprises: for a mobile terminal with a camera being on a center position of the mobile terminal, a rotation of the mobile terminal around the center position of the mobile terminal in a plane where the mobile terminal locates; and for a mobile terminal with a camera being on other position except the center position of the mobile terminal, a rotation of the mobile terminal around the center position of the mobile terminal in the plane where the mobile terminal locates, when a line from the center position of the mobile terminal to the center position of the target object is perpendicular to the plane where the mobile terminal locates.

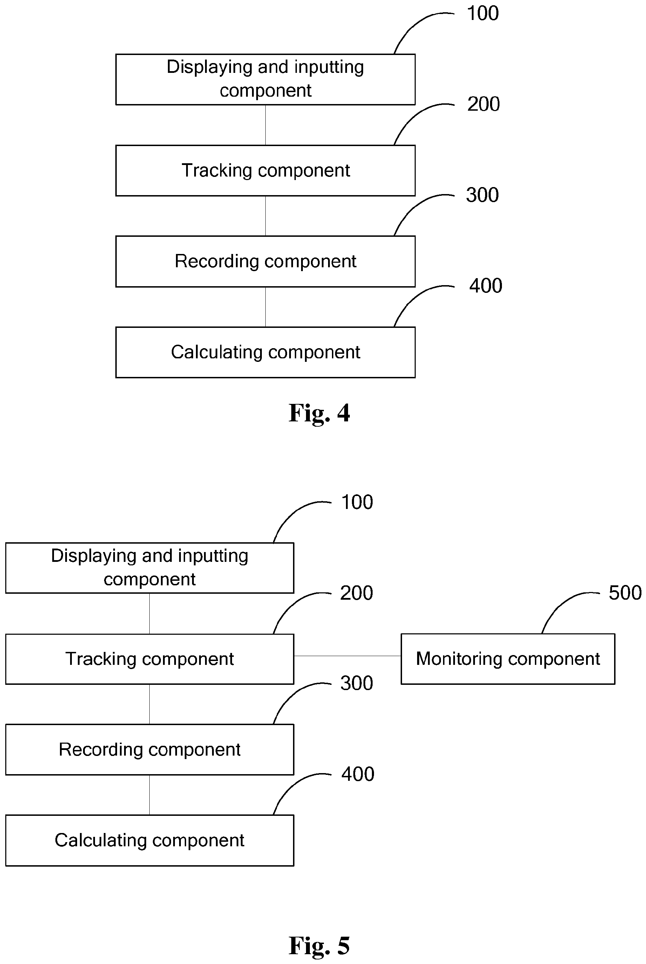

A single-camera distance ranging system in a third example of the present invention is located on a mobile terminal, and as shown in Fig.4 the system comprises:

A displaying and inputting component 100: configured to acquire an image which contains a target object by a camera of a mobile terminal and display the image on a screen; and receive the selection of the target object by a user.

Optionally, for a screen with touch functionality, the displaying and inputting component 100 can receive a contour of the target object input by means of clicking or drawing a line on a screen by the user. For a mobile terminal with an ordinary screen, the displaying and inputting component 100 can also receive the contour of the target object input by means of pressing keys on a keyboard by the user. Alternatively, for a mobile terminal that can automatically recognize a target object on the screen, when the approximate region where the target object locates is clicked by the user by the displaying and inputting component 100, the mobile terminal can recognize the target object within the region or near the region.

A tracking component 200: configured to recognize and track the target object during the translation of the mobile terminal towards the target object.

Optionally, the tracking component 200 can recognize and track the target object input by the displaying and inputting component 100 according to a related algorithm in current image processing technologies. For example: when the distance in brightness or colour between the target object and the background of the target object is greater, image edge extraction algorithms can be adopted to recognize and track the target object. Wherein the image edge extraction algorithms can comprise at least one of the following: an adaptive threshold multi-scale edge extraction algorithm based on b-spline wavelets, a multi-scale discrete Canny edge extraction algorithm with combination of embedded confidence, a new edge contour extraction model-quantum statistical deformable model image edge tracking algorithm, an image tracking algorithm based on particle filter, a multi-information fusion particle filter tracking algorithm of the algorithm for melding a structural information and scale invariant feature transformation, an improved hausdorff video target tracking algorithm and so on.

A recording component 300: configured to record a translation distance of the mobile terminal and a ratio of a display width of the target object before the translation of the mobile terminal towards the target object to a display width of the target object after the translation of the mobile terminal towards the target object are recorded.

Optionally, the ratio recorded by the recording component 300 the display width of the target object before the translation of the mobile terminal towards the target object to the display width of the target object after the translation of the mobile terminal towards the target object is replaced with a ratio of a screen framing width of the target object before the translation of the mobile terminal towards the target object to a screen framing width of the target object after the translation of the mobile terminal towards the target object. During the translation of the mobile terminal, the target object is always is within the framing scope of the mobile terminal screen. In addition, the recording component 300 can acquire the translation distance of the mobile terminal by the accelerometer equipped on the mobile terminal and record the acquired translation distance of the mobile terminal.

A calculating component400: configured to calculate the distance between the mobile terminal and the target object based on data recorded in the recording component.

A single-camera distance ranging system in the fourth example of the present invention is shown in Fig.5, and a displaying and inputting component 100, a recording component 300, a calculating component 400 of the system described in the fourth example are the same to the corresponding components in the third example. The difference between the fourth example of the present invention and the third example of the present invention is that, a monitoring component 500 is added, wherein the monitoring component 500 is configured to, during the executing process of the tracking component 200, monitor the posture during the translation of the mobile terminal towards the target object so as to ensure the accuracy of the distance ranging results. For example:

A monitoring component 500: configured to monitor the posture during the translation of the mobile terminal towards the target object, and when a rotation of the mobile terminal is monitored, report that a distance ranging operation fails; when the rotation of the mobile terminal is not monitored, continue to call the tracking component 200 to recognize and track the target object.

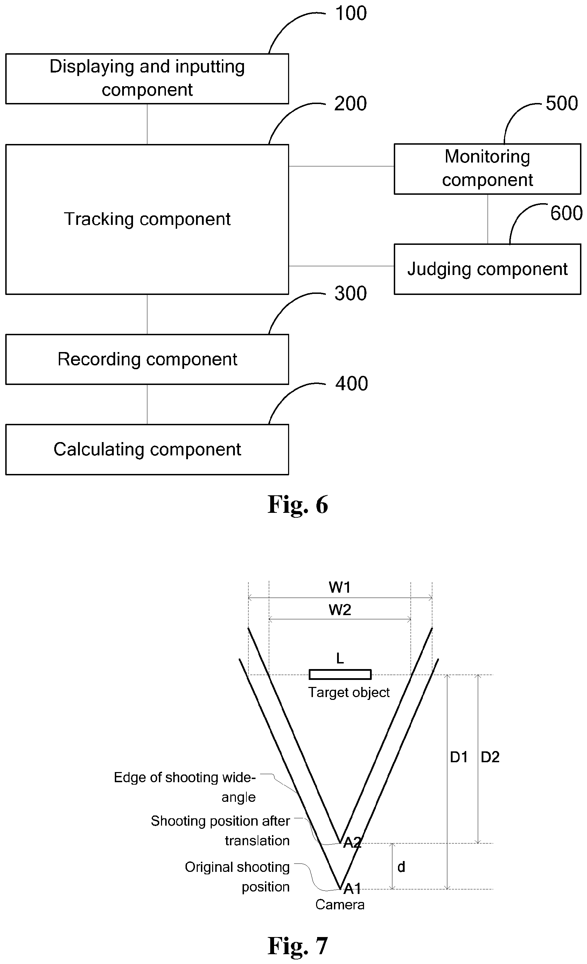

A single-camera distance ranging system in the second example embodiment of the present invention is shown in Fig.6, and a displaying and inputting component 100, a recording component 300, a calculating component 400 of the system described in the second example embodiment are the same to the corresponding components in the third example.

The difference between the second example embodiment of the present invention and the third example of the present invention is that, a monitoring component 500 and a judging component 600 are added in the second example embodiment of the present invention, wherein the monitoring component 500 is configured to, during the executing process of the tracking component 200, monitor a posture during the translation of the mobile terminal towards the target object, and the judging component 600 is configured to judge. For example:

A monitoring component 500: configured to monitor the posture during translation of the mobile terminal towards the target object, and when the rotation of the mobile terminal is monitored, call the judging component 600; when the rotation of the mobile terminal is not monitored, continue to call the tracking component 200 to recognize and track the target object.

Optionally, the monitoring component 500 can monitor the posture during the translation of the mobile terminal towards the target object by a three-axis gyro in the mobile terminal. When the mobile terminal rotates, the three-axis gyro reports the date about orientation and angular velocity during the rotation and so on, and the judging component 600 can further judge whether the rotation is permitted according to these data. In a practical application, when a mobile terminal hold by the user is to perform the distance ranging operation, it is easy to jitter the mobile terminal so as to cause a slight rotation of the mobile terminal, but the rotation can be permitted if the rotation does not influences the result of the distance ranging operation.

A judging component 600: configured to judge whether the rotation is valid, and when the rotation of the mobile terminal is valid, continue to call the tracking component 200 to recognize and track the target object; when the rotation of the mobile terminal is not valid, report that the distance ranging operation fails.

Optionally, the valid rotation comprises: for a mobile terminal with a camera being on a center position of the mobile terminal, a rotation of the mobile terminal around the center position of the mobile terminal in a plane where the mobile terminal locates.

In the following, based on the above embodiments, an application example of utilizing a single-camera to perform distance ranging technical solution in a mobile phone is introduced in combination with the drawings 7, 8, 9 and 10.

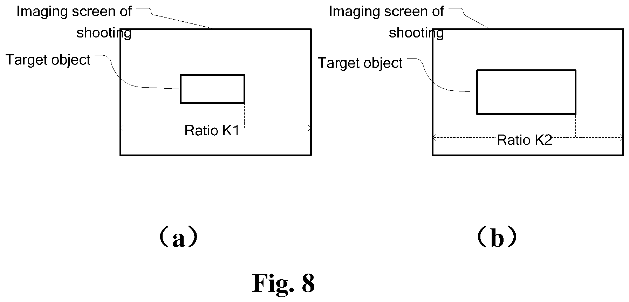

Fig.7 is a diagram of changes in related distance and ratio before and after a camera of a mobile phone translates towards a target object, and Fig.8 (a), (b) are respectively diagrams of changes in size and related ratio of a target object from a perspective of a screen before and after a camera of a mobile terminal translates towards the target object.

It can be seen from Fig.7, the camera translates horizontally from an original position A1 to a position A2, so that a distance between the camera and the target object changes from D1 to D2, thereby generating a translation distance d=D1-D2, but the width L of the target object remains unchanged, and the framing width of the target object on the screen via the camera changes from W1 to W2, wherein D1 or D2 is just the distance to be calculated between the target object and the camera. Take the calculation for D1 as an example below.

Firstly, in conjunction with Fig.7, a ratio of a width of the target object on the screen to a framing width of the target object before and after the camera is translated will change, namely $K1 = \frac{L}{W1}$, $K2 = \frac{L}{W2}$. In accordance with the change in ratio shown in Fig.7, it can be obtained that: $\frac{D1}{D2} = \frac{W1}{W2}$, and since $K1 = \frac{L}{W1}$, $K2 = \frac{L}{W2}$, then $\frac{D1}{D2} = \frac{K1}{K2}$.

Furthermore, because $\frac{D1}{D1-D2} = \frac{K1}{K1-K2}$,

and d=D1-D2, then it can be obtained that: $\frac{D1}{d} = \frac{K1}{K1-K2}$, namely $D1 = \frac{K1}{K1-K2} \times d$, that is to say that D1 can be calculated when the ratio of K1 to K2 is only known.

In conclusion, from a physical principle perspective, when the distance of the translation of the camera towards the target object is d, the ratios of the widths of the target object on the screen to the framing widths of the target object are K1, K2 respectively before and after the translation of the camera, and then the distance D1 from the camera to the target object can be obtained by a formula $D1 = \frac{K1}{K1-K2} \times d$. D1

In practical operation, in conjunction with Fig.8 (a), (b), the ratio of the display width of the target object to a screen width will also change before and after translation of the camera, and the display width of the target object changes from L1 to L2, but the screen width W of the mobile phone does not change. The above ratios K1, K2 can also be transformed to: $K1 = \frac{L1}{W}$, $K2 = \frac{L2}{W}$, while using $D1 = \frac{K1}{K1-K2} \times d$, D1 can be calculated. Because the camera is located on the mobile terminal, for the target object, the distance from the camera to the target object is just the distance from the mobile terminal to the target object.

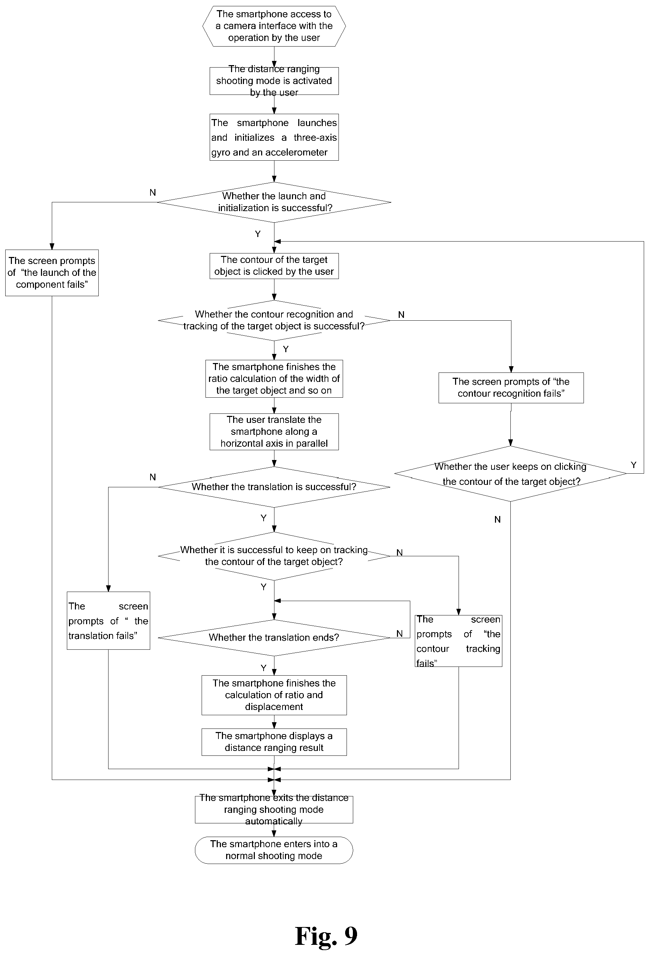

Below, an implementation flow of an application example embodiment of the present invention in combination with Fig.9 is further described.

A user has a smartphone in hand, and the smartphone is equipped with a 4.5 inch In-Plane Switching (IPS) capacitive touch screen with a High Definition (HD) resolution (1280X720) and 8 megapixel/1.3 megapixel rear-face/face camera, and is equipped with a three-axis gyro and an accelerometer. Now, the user hopes to know an approximate linear distance from a sofa where he is sitting to a turned-on television directly in front of the sofa.

Firstly the smartphone access to a camera interface with the operation by the user, then use the 8 megapixel camera to take pictures, and selects "distance ranging shooting mode" in a function menu of the camera and enters into the "distance ranging shooting mode". At the same time, an image captured by the camera is still shown in real time on the smartphone screen.

After the distance ranging shooting mode is activated, the smartphone will launch and initialize the three-axis gyro and accelerometer, thereby perceiving the current posture and movement of the smartphone. When the three-axis gyro and accelerometer do not work properly during the launch or initialization, a tip of "posture or motion sensor fails to launch" appears on the smartphone screen, thereby exiting the distance ranging shooting mode and entering a normal shooting mode.

The smartphone screen firstly prompts of clicking a contour of a target object to be measured on the captured image. Then the user clicks a contour of the television screen on the smartphone screen and confirms to finish the clicking. Because there is a greater difference in brightness between the television screen and a television border as well as a television background wall, it is easy for the smartphone to recognize and track the contour of the television screen by calculating the image displayed on the screen. After recognizing and tracking the contour of the television screen, the smartphone will prompt for finishing the contour tracking on the screen. At the same time, the smartphone calculates a ratio of a display width of the contour on the screen to a width of the smartphone screen. When the smartphone finds that the contour of the target object clicked by the user can not be recognized and tracked subsequently, a tip of "the contour recognition fails" will then appear on the screen, so as to prompt the user to exit the distance ranging shooting mode or click the contour of the target object again.

Then, the smartphone screen prompts the user to translate the smartphone to the target object, and at the same time the three-axis gyro is used to monitor the posture of the smartphone, thereby ensuring that the user translates the smartphone along a horizontal axis between the smartphone and the target object and towards the target object in parallel. Since both the smartphone and the target object are perpendicular to a horizontal plane, the horizontal axis between the smartphone and the target object is just a line between the center position of the smartphone and the center position of the target object. When the smartphone detects that the user does not translate the smartphone along the horizontal axis in parallel, then a tip of "the shooting for distance ranging fails" appears on the screen, and it prompts to restart the distance ranging shooting mode.

When the user translates the smartphone, the smartphone will also keep tracking the contour of the target object, and when the contour tracking fails, then a tip of "the contour tracking for the target object fails" appears on the screen and then the smartphone exits the distance ranging shooting mode.

When the user translates the smartphone, the smartphone will perform a quadratic integral on the acceleration data of the smartphone acquired by the accelerometer, so as to obtain a translation distance of the smartphone, and at the same time the smartphone will also track the change of contour of the television screen.

After the user translates the smartphone towards the television screen along the horizontal axis for a short distance, he stops. When the accelerometer perceives the stop state of the smartphone, a tip of "the distance ranging calculation operation is executing" appears on the smartphone screen, and at the same time the smartphone will calculate a ratio of the display width of contour of the television screen on the screen to the width of the smartphone screen at the current state.

Finally, according to the ratios of the display width of contour of the television screen on the screen to the width of the smartphone screen before and after the translation and the calculated translation distance of the smartphone, the smartphone will obtain a distance between the smartphone and the television screen before the translation, and at the same time, the distance between the smartphone and the television screen after the translation can be also obtained. During the calculation, a tip of "the distance ranging calculation is executing" keeps appearing on the smartphone screen, but after calculation, a tip of "the distance ranging calculation have done" appears on the screen, and the calculated result of the distance from the original position of the smartphone to the television screen or from the current position to the television screen is shown. After the calculation result is displayed for 3 seconds, the smartphone exits the distance ranging shooting mode automatically, and enters into the normal shooting mode.

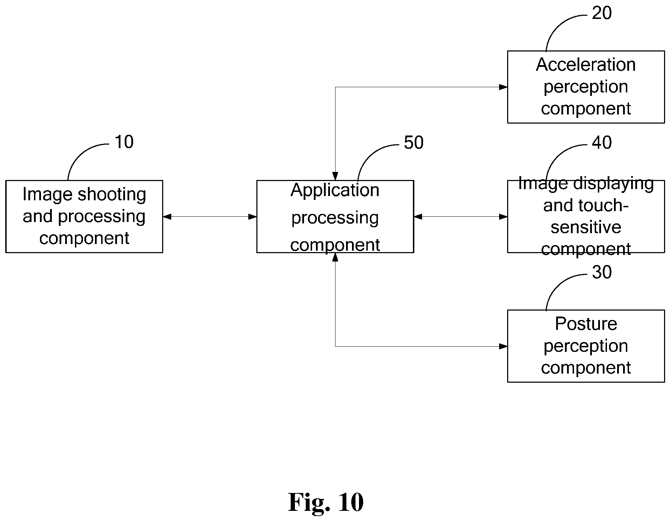

Below, an implementation system of an application example embodiment of the present invention in combination with Fig.10 is further described:

A. An image shooting and processing component 10, namely lens and eyeglass of a camera, image sensor, digital-to-analog converter, digital image signal processor (ISP) and related mechanisms and so on, which is a component used to convert an image of a target object into a digital image signal;

B. An acceleration perception component 20, namely an accelerometer of a smartphone and the mechanisms of the accelerometer, digital-to-analog converter and so on;

C. A posture perception component 30, namely three-axis gyro of the smartphone and the mechanisms of the three-axis gyro and so on;

D. An image displaying and touch-sensitive component 40, namely display screen or touch screen of the smartphone, and the digital-to-analog converter of the display screen or touch screen and so on;

E. An application processing component 50, namely an application processor chip of the smartphone, which can process a digital image signal, an acceleration perception signal, a posture perception signal and so on, thereby completing contour recognition and tracking of an measured object, posture monitoring and displacement calculation and so on, and can output the prompt for a user and process touch-control operation of a user and so on by the image displaying and touch-sensitive component 40.

The application processing component 50 is a core component of the system described in the application example embodiment, which can control the image shooting and the processing component 10, the acceleration perception component 20, the posture perception component 30 and the image displaying and touch-sensitive component 40, and receive and process signals from the above four components.

The displaying and inputting component 40 can acquire an image which contains a target object through cameras of the mobile terminal and display the image on the screen, and receive the input of contour of the target object by a user. The interaction between the application processing component 50 and the image shooting and processing component 10 can realize functions of recognition and tracking of the target object and obtain the ratio of the display width of the target object before the translation of the mobile terminal to the display width of the target object after the translation of the mobile terminal; the interaction between the application processing component 50 and the acceleration perception component 20 can realize a function of recording the translation distance of the mobile terminal; the posture perception component 30 can realize a function of monitoring the posture during the translation of the mobile terminal towards the target object; the application processing component 50 can further process data reported by the posture perception component 30 so as to realize a function of judging whether the rotation of the mobile terminal is valid; finally, the application processing component 50 calculates the distance between the mobile terminal and the target object based on the recorded data.

The application processing component 50 can integrate with a baseband processor chip of a smartphone, so that the baseband processor chip of the smartphone also has related functions of the application processing component 50.

In a single-camera distance ranging method and system of the embodiment of the present invention, when the mobile terminal is in the camera photograph mode, the outer edge of the target object is continuously recognized and tracked. The mobile terminal is translated toward the target object by the user. The mobile terminal calculates the distance between the mobile terminal and the target object according to the change in the display width of the target object on a screen or the change in the framing width on the screen of the mobile terminal, and the translation distance of the mobile terminal. The whole distance ranging process is completed based on the existing mobile terminal image processing and movement perception functions, thereby making possible single-camera distance ranging by a mobile terminal with no requirement for additional optical component. In addition, the accuracy of the distance ranging can be further ensured with the added step for monitoring the posture during the translation of the mobile terminal towards the target object.

Through the description of embodiments, the technical solutions and effect used in the present invention for reaching the predetermined purpose should be understood more deeply and specifically. However the attached figures are used only for providing references and illustration, and not for limiting the present invention.

## Claims

1. A single-camera distance ranging method, using a mobile terminal with a camera being on a center position of the mobile terminal, comprising:

   a displaying and inputting step: the camera of the mobile terminal acquiring an image which contains a target object and displaying the image on a screen, and receiving a selection of the target object by a user;
   a tracking step: during a translation of the mobile terminal by the user towards the target object, recognizing and tracking a contour of the target object after receiving the selection of the target object by the user;
   a recording step: recording a translation distance of the mobile terminal and a ratio of a display width of the target object before the translation of the mobile terminal to a display width of the target object after the translation of the mobile terminal; and
   a calculating step: based on data recorded in the recording step, calculating a distance between the mobile terminal and the target object;

   wherein the method further comprises: a monitoring step: monitoring a posture of the mobile terminal during the translation of the mobile terminal towards the target object; when a rotation of the mobile terminal is not monitored, continuing to execute the tracking step; a judging step: when the rotation of the mobile terminal is monitored in the monitoring step, judging whether the rotation of the mobile terminal is valid, and when the rotation of the mobile terminal is valid, continuing to execute the tracking step; when the rotation of the mobile terminal is not valid, reporting that the distance ranging operation fails; a valid rotation comprises:, a rotation of the mobile terminal around the center position of the mobile terminal in a plane where the mobile terminal locates; wherein the plane where the mobile terminal locates refers to a plane being perpendicular to a horizontal plane and parallel to the target object; wherein in the monitoring step, the posture during the translation of the mobile terminal towards the target object is monitored by a three-axis gyro in the mobile terminal.

2. The method according to claim 1, **characterized in that** in the recording step, the translation distance of the mobile terminal is acquired by an accelerometer in the mobile terminal and the acquired translation distance of the mobile terminal is recorded.

3. A single-camera distance ranging system, located on a mobile terminal, configured to use a mobile terminal with a camera being on a center position of the mobile terminal, comprising:

   a displaying and inputting component: configured to acquire an image which contains a target object by the camera of the mobile terminal and display the image on a screen; and receive a selection of the target object by a user;
   a tracking component: configured to, after receiving the selection of the target object by the user, recognize and track a contour of the target object during a translation of the mobile terminal by the user towards the target object;
   a recording component: configured to record a translation distance of the mobile terminal and a ratio of a display width of the target object before the translation of the mobile terminal to a display width of the target object after the translation of the mobile terminal; and
   a calculating component: configured to calculate a distance between the mobile terminal and the target object based on data recorded in the recording component;
   wherein the system further comprises: a monitoring component: configured to monitor a posture of the mobile terminal during the translation of the mobile terminal towards the target object; when a rotation of the mobile terminal is not monitored, continue to call the tracking component to recognize and track the target object; a judging component: configured to, when the rotation of the mobile terminal is monitored by the monitoring component, judge whether the rotation of the mobile terminal is valid, and when the rotation of the mobile terminal is valid, continue to call the tracking component to recognize and track the target object; when the rotation of the mobile terminal is not valid, report that the distance ranging operation fails; a valid rotation comprises:, a rotation of the mobile terminal around the center position of the mobile terminal in a plane where the mobile terminal locates; wherein the plane where the mobile terminal locates refers to a plane being perpendicular to a horizontal plane and parallel to the target object; wherein the monitoring component is configured to monitor the posture during the translation of the mobile terminal towards the target object by a three-axis gyro in the mobile terminal.

4. The system according to claim 3, **characterized in that** the recording component is configured to acquire the translation distance of the mobile terminal by an accelerometer in the mobile terminal and record the acquired translation distance of the mobile terminal.

**Patentansprüche**

1. Abstandmessverfahren mit einer Einzelkamera unter Verwendung eines mobilen Endgeräts, wobei sich eine Kamera in einer mittleren Position des mobilen Endgeräts befindet, umfassend:

einen Schritt des Anzeigens und Eingebens: Erfassen eines Bildes, das einen Zielgegenstand enthält, und Anzeigen des Bildes auf einem Bildschirm durch die Kamera des mobilen Endgeräts und Empfangen einer Auswahl des Zielgegenstands durch einen Benutzer;
einen Schritt des Nachverfolgens: während einer Übertragung des mobilen Endgeräts durch den Benutzer hin zum Zielgegenstand, Erkennen und Nachverfolgen eines Umfangs des Zielgegenstands nach dem Empfangen der Auswahl des Zielgegenstands durch den Benutzer;
einen Schritt des Aufzeichnens: Aufzeichnen eines Übertragungsabstands des mobilen Endgeräts und eines Verhältnisses einer Anzeigebreite des Zielgegenstands vor der Übertragung des mobilen Endgeräts zu einer Anzeigebreite des Zielgegenstands nach der Übertragung des mobilen Endgeräts; und
einen Schritt des Berechnens: basierend auf Daten, die im Schritt des Aufzeichnens aufgezeichnet wurden, Berechnen eines Abstands zwischen dem mobilen Endgerät und dem Zielgegenstand;

wobei das Verfahren weiter Folgendes umfasst: einen Schritt des Überwachens: Überwachen einer Stellung des mobilen Endgeräts während der Übertragung des mobilen Endgeräts hin zum Zielgegenstand; wenn eine Drehung des mobilen Endgeräts nicht überwacht wird, weiterhin Durchführen des Schritts des Nachverfolgens;
einen Schritt des Beurteilens: wenn die Drehung des mobilen Endgeräts im Schritt des Überwachens überwacht wird, Beurteilen, ob die Drehung des mobilen Endgeräts gültig ist, und wenn die Drehung des mobilen Endgeräts gültig ist, weiterhin Durchführen des Schritts des Nachverfolgens; wenn die Drehung des mobilen Endgeräts nicht gültig ist, Berichten, dass der Abstandsmessbetrieb fehlschlägt; eine gültige Drehung Folgendes umfasst: eine Drehung des mobilen Endgeräts um die mittlere Position des mobilen Endgeräts in einer Ebene, in der sich das mobile Endgerät befindet;
wobei sich die Ebene, in der sich das mobile Endgerät befindet, auf eine Ebene bezieht, die senkrecht zu einer horizontalen Ebene und parallel zum Zielgegenstand ist;
wobei im Schritt des Überwachens die Stellung während der Übertragung des mobilen Endgeräts hin zum Zielgegenstand durch einen Dreiachsenkreisel im mobilen Endgerät überwacht wird.

2. Verfahren nach Anspruch 1, **dadurch gekennzeichnet, dass** im Schritt des Aufzeichnens der Übertragungsabstand des mobilen Endgeräts durch einen Beschleunigungsmesser im mobilen Endgerät erfasst wird und der erfasste Übertragungsabstand des mobilen Endgeräts aufgezeichnet wird.

3. Abstandmesssystem mit einer Einzelkamera, das sich auf einem mobilen Endgerät befindet, konfiguriert, um ein mobiles Endgerät mit einer Kamera zu verwenden, die sich in einer mittleren Position des mobilen Endgeräts befindet, umfassend:

eine Komponente zum Anzeigen und Eingeben:

konfiguriert, um eine Bild, das einen Zielgegenstand enthält, durch die Kamera des mobilen Endgeräts zu erfassen und das Bild auf einem Bildschirm anzuzeigen;
und eine Auswahl des Zielgegenstands durch einen Benutzer zu empfangen;

eine Komponente zum Nachverfolgen: konfiguriert, um nach dem Empfangen der Auswahl des Zielgegenstands durch den Benutzer einen Umfang des Zielgegenstands während einer Übertragung des mobilen Endgeräts durch den Benutzer hin zum Zielgegenstand zu erkennen und nachzuverfolgen;
eine Komponente zum Aufzeichnen: konfiguriert, um einen Übertragungsabstand des mobilen Endgeräts und ein Verhältnis der Anzeigebreite des Zielgegenstands vor der Übertragung des mobilen Endgeräts zu einer Anzeigenbreite des Zielgegenstands nach der Übertragung des mobilen Endgeräts aufzuzeichnen; und
eine Komponente zum Berechnen: konfiguriert, um einen Abstand zwischen dem mobilen Endgerät und dem Zielgegenstand basierend auf den Daten, aufgezeichnet in der Komponente zum Aufzeichnen, zu berechnen;

wobei das System weiter Folgendes umfasst: eine Komponente zum Überwachen: konfiguriert, um eine Stellung des mobilen Endgeräts während der Übertragung des mobilen Endgeräts hin zum Zielgegenstand zu überwachen; wenn eine Drehung des mobilen Endgeräts nicht überwacht wird, weiterhin die Komponente zum Nachverfolgen aufzurufen, um den Zielgegenstand zu erkennen und nachzuverfolgen;
eine Komponente zum Beurteilen: konfiguriert um, wenn die Drehung des mobilen Endgeräts durch die Komponente zum Überwachen überwacht wird, zu beurteilen, ob die Drehung des mobilen Endgeräts gültig ist, und wenn die Drehung des mobilen Endgeräts gültig ist, weiterhin die Komponente zum Nachverfolgen aufzurufen, um den Zielgegenstand zu erkennen und nachzuverfolgen; wenn die Drehung des mobilen Endgeräts nicht gültig ist, zu berichten, dass der Abstandsmessbetrieb fehlschlägt; eine gültige Drehung Folgendes umfasst: eine Drehung des mobilen Endgeräts um die mittlere Position des mobilen Endgeräts in einer Ebene, in der sich das mobile Endgerät befindet;

wobei sich die Ebene, in der sich das mobile Endgerät befindet, auf eine Ebene bezieht, die senkrecht zu einer horizontalen Ebene und parallel zum Zielgegenstand ist;

wobei die Komponente zum Überwachen konfiguriert ist, um die Stellung während der Übertragung des mobilen Endgeräts hin zum Zielgegenstand durch einen Dreiachsenkreisel im mobilen Endgerät zu überwachen.

4. System nach Anspruch 3, **dadurch gekennzeichnet, dass** die Komponente zum Aufzeichnen konfiguriert ist, um den Übertragungsabstand des mobilen Endgeräts durch einen Beschleunigungsmesser im mobilen Endgerät zu erfassen und den erfassten Übertragungsabstand des mobilen Endgeräts aufzuzeichnen.

**Revendications**

1. Procédé de télémétrie à une seule caméra, utilisant un terminal mobile avec une caméra étant sur une position centrale du terminal mobile, comprenant :

   une étape d'affichage et de saisie : acquisition d'une image qui contient un objet cible et affichage de l'image sur un écran, par la caméra du terminal mobile, et réception d'une sélection de l'objet cible par un utilisateur ;
   une étape de suivi : pendant une translation du terminal mobile par l'utilisateur vers l'objet cible, reconnaissance et suivi d'un contour de l'objet cible après la réception de la sélection de l'objet cible par l'utilisateur ;
   une étape d'enregistrement : enregistrement d'une distance de translation du terminal mobile et d'un rapport d'une largeur d'affichage de l'objet cible avant la translation du terminal mobile à une largeur d'affichage de l'objet cible après la translation du terminal mobile ; et
   une étape de calcul : sur la base de données enregistrées dans l'étape d'enregistrement, calcul d'une distance entre le terminal mobile et l'objet cible ;

   dans lequel le procédé comprend en outre : une étape de surveillance : surveillance d'une attitude du terminal mobile pendant la translation du terminal mobile vers l'objet cible ; lorsqu'une rotation du terminal mobile n'est pas surveillée, poursuite de l'exécution de l'étape de suivi ;
une étape d'estimation : lorsque la rotation du terminal mobile est surveillée dans l'étape de surveillance, estimation du fait que la rotation du terminal mobile est ou non valable, et lorsque la rotation du terminal mobile est valable, poursuite de l'exécution de l'étape de suivi ; lorsque la rotation du terminal mobile n'est pas valable, signalement de l'échec de l'opération de télémétrie ; une rotation valable comprend : une rotation du terminal mobile autour de la position centrale du terminal mobile dans un plan où le terminal mobile se situe ;
dans lequel le plan où le terminal mobile se situe fait référence à un plan étant perpendiculaire à un plan horizontal et parallèle à l'objet cible ;
dans lequel dans l'étape de surveillance, l'attitude pendant la translation du terminal mobile vers l'objet cible est surveillée par un gyroscope à trois axes dans le terminal mobile.

2. Procédé selon la revendication 1, **caractérisé en ce que** dans l'étape d'enregistrement, la distance de translation du terminal mobile est acquise par un accéléromètre dans le terminal mobile et la distance de translation acquise du terminal mobile est enregistrée.

3. Système de télémétrie à une seule caméra, situé sur un terminal mobile, configuré pour utiliser un terminal mobile avec une caméra située sur une position centrale du terminal mobile, comprenant :

   un composant d'affichage et de saisie : configuré pour acquérir une image qui contient un objet cible par la caméra du terminal mobile et afficher l'image sur un écran ; et recevoir une sélection de l'objet cible par un utilisateur ;
   un composant de suivi : configuré pour, après la réception de la sélection de l'objet cible par l'utilisateur, reconnaître et suivre un contour de l'objet cible pendant une translation du terminal mobile par l'utilisateur vers l'objet cible ;
   un composant d'enregistrement : configuré pour enregistrer une distance de translation du terminal mobile et un rapport d'une largeur d'affichage de l'objet cible avant la translation du terminal mobile à une largeur d'affichage de l'objet cible après la translation du terminal mobile ; et
   un composant de calcul : configuré pour calculer une distance entre le terminal mobile et l'objet cible sur la base des données enregistrées dans le composant d'enregistrement ;

   dans lequel le système comprend en outre : un composant de surveillance : configuré pour surveiller une attitude du terminal mobile pendant la translation du terminal mobile vers l'objet cible ; lorsqu'une rotation du terminal mobile n'est pas surveillée, pour continuer à demander au composant de suivi de reconnaître et de suivre l'objet cible ;

un composant d'estimation : configuré pour, lorsque la rotation du terminal mobile est surveillée par le composant de surveillance, estimer le fait que la rotation du terminal mobile est ou non valable, et lorsque la rotation du terminal mobile est valable, pour continuer à demander au composant de suivi de reconnaître et de suivre l'objet cible ; lorsque la rotation du terminal mobile n'est pas valable, pour signaler l'échec de l'opération de télémétrie ; une rotation valable comprend : une rotation du terminal mobile autour de la position centrale du terminal mobile dans un plan où le terminal mobile se situe ;

dans lequel le plan où le terminal mobile se situe fait référence à un plan étant perpendiculaire à un plan horizontal et parallèle à l'objet cible ;

dans lequel le composant de surveillance est configuré pour surveiller l'attitude pendant la translation du terminal mobile vers l'objet cible par un gyroscope à trois axes dans le terminal mobile.

4.  Système selon la revendication 3, **caractérisé en ce que** le composant d'enregistrement est configuré pour acquérir la distance de translation du terminal mobile par un accéléromètre dans le terminal mobile et enregistrer la distance de translation acquise du terminal mobile.

```
                    ┌──────────────────┐
                    │      Start        │
                    └──────────────────┘
                              │
                              ▼
┌──────────────────────────────────────────────┐        S101
│ A camera of a mobile terminal acquires an      │
│ image which contains a target object and       │
│ displays the image on a screen, and receives   │
│ the selection of the target object by a user   │
└──────────────────────────────────────────────┘
                              │
                              ▼
┌──────────────────────────────────────────────┐        S102
│ During the translation of the mobile terminal  │
│ towards the target object, the target object   │
│ is recognized and tracked                      │
└──────────────────────────────────────────────┘
                              │
                              ▼
┌──────────────────────────────────────────────┐        S103
│ A translation distance of the mobile terminal  │
│ and a ratio of a display width of the target   │
│ object before the translation of the mobile    │
│ terminal to a display width of the target      │
│ object and after the translation of the mobile │
│ terminal are recorded                          │
└──────────────────────────────────────────────┘
                              │
                              ▼        S104
┌──────────────────────────────────────────────┐
│ Based on the data recorded in the step S103,   │
│ the distance between the mobile terminal and   │
│ the target object is calculated                │
└──────────────────────────────────────────────┘
                              │
                              ▼
                    ┌──────────────────┐
                    │       End         │
                    └──────────────────┘
```

**Fig. 1**

Start

A camera of a mobile terminal
acquires an image which contains
a target object and displays the
image on a screen, and receives
the selection of the target object by
a user

S201

S202

S205

During the translation of the mobile
terminal towards the target object,
the target object is recognized and
tracked

No rotation

A posture during the
translation of the mobile
terminal towards the target
object is monitored

A translation distance of the mobile
terminal and a ratio of a display
width of the target object before
the translation of the mobile
terminal towards the target object
to a display width of the target
object after the translation of the
mobile terminal towards the target
object are recorded

S203

rotation

Based on the data recorded in the
step S203, the distance between
the mobile terminal and the target
object is calculated

S204

End

Fig. 2

Start

A camera of a mobile terminal
acquires an image which
contains a target object and
displays the image on a
screen, and receives the
selection of the target object by
a user

S301

S302

S305

A posture during
translation of the mobile
terminal towards the target
object is monitored

no rotation

During the translation of the
mobile terminal towards the
target object, the target object
is recognized and tracked

rotation

S306

It is judged whether the
rotation is valid

Y

N

A translation distance of the
mobile terminal and a ratio a
display width of the target
object before the translation of
the mobile terminal towards
the target object to a display
width of the target object after
the translation of the mobile
terminal towards the target
object are recorded

S303

Based on the data recorded in
the step S303, the distance
between the mobile terminal
and the target object is
calculated

S304

End

**Fig. 3**

100

```
┌─────────────────────────────┐
│   Displaying and inputting   │
│         component            │
└─────────────────────────────┘
              │
              │                  200
┌─────────────────────────────┐
│     Tracking component       │
└─────────────────────────────┘
              │
              │                  300
┌─────────────────────────────┐
│     Recording component      │
└─────────────────────────────┘
              │
              │                  400
┌─────────────────────────────┐
│    Calculating component     │
└─────────────────────────────┘
```

**Fig. 4**

100

```
┌──────────────────────┐
│ Displaying and inputting │
│      component        │
└──────────────────────┘
           │                 200
┌──────────────────────┐              500
│  Tracking component   │───────┌──────────────────────┐
└──────────────────────┘       │  Monitoring component  │
           │                 300  └──────────────────────┘
┌──────────────────────┐
│  Recording component  │
└──────────────────────┘
           │                 400
┌──────────────────────┐
│  Calculating component │
└──────────────────────┘
```

**Fig. 5**

100

## Displaying and inputting component

200

## Tracking component

500

## Monitoring component

600

## Judging component

300

## Recording component

400

## Calculating component

**Fig. 6**

W1

W2

L

Target object

D1  D2

Edge of shooting wide-angle

Shooting position after translation

A2

d

Original shooting position

A1

Camera

**Fig. 7**

Imaging screen of
shooting

Target object

Ratio K1

Imaging screen of
shooting

Target object

Ratio K2

（a）                    （b）

**Fig. 8**

The smartphone access to a camera interface with the operation by the user

The distance ranging shooting mode is activated by the user

The smartphone launches and initializes a three-axis gyro and an accelerometer

Whether the launch and initialization is successful? — N

The screen prompts of "the launch of the component fails"

Y

The contour of the target object is clicked by the user

Whether the contour recognition and tracking of the target object is successful? — N

The screen prompts of "the contour recognition fails"

Y

The smartphone finishes the ratio calculation of the width of the target object and so on

The user translate the smartphone along a horizontal axis in parallel

Whether the user keeps on clicking the contour of the target object? — Y

N

Whether the translation is successful? — N

Y

The screen prompts of "the translation fails"

Whether it is successful to keep on tracking the contour of the target object? — N

Y

Whether the translation ends? — N

The screen prompts of "the contour tracking fails"

Y

The smartphone finishes the calculation of ratio and displacement

The smartphone displays a distance ranging result

The smartphone exits the distance ranging shooting mode automatically

The smartphone enters into a normal shooting mode

Fig. 9

18

**Fig. 10**

## REFERENCES CITED IN THE DESCRIPTION

**Patent documents cited in the description**

- CN 102175228 A1

**Non-patent literature cited in the description**

- **SAHIN E et al.** Development of a visual object localization module for mobile robots. *Adavanced Mobile Robots,* 1999

- **CLEMENS HOLZMANN et al.** Measuring Distance with Mobile Phones Using Single-Camera Stereo Vision. *32nd IEEE International Conference on distributed Computing Systems workshops,* June 2012